# FASCICULE DE BREVET EUROPEEN

(11) **EP 2 148 802 B1**
(45) Date de publication et mention de la délivrance du brevet: **23.02.2011**
(21) Numéro de dépôt: 08805581.9
(22) Date de dépôt: 16.05.2008
(51) Int. Cl.: B62D 17/00, B62D 6/00, B62D 111/00, B62D 117/00, B62D 103/00

(54) **PROCEDE DE REGLAGE BINAIRE DE LA POSITION ANGULAIRE DU PLAN D'UNE ROUE DE VEHICULE AUTOMOBILE**
BINÄRES EINSTELLVERFAHREN FÜR DIE WINKELPOSITION DER FLÄCHE EINES MOTORFAHRZEUGRADES
BINARY ADJUSTMENT METHOD FOR THE ANGULAR POSITION OF THE PLANE OF A MOTOR VEHICLE WHEEL

(30) Priorité: 23.05.2007 FR 0703665
(43) Date de publication de la demande: 03.02.2010
(73) Titulaire: Société de Technologie Michelin, 63000 Clermont-Ferrand (FR); Michelin Recherche et Technique S.A., 1763 Granges-Paccot (CH)
(72) Inventeur: BLONDELET, Michel, F-63450 Le Crest (FR); VAXELAIRE, Alain, F-63450 Romagnat (FR); PYSZCZEK, Christophe, F-63360 Gerzat (FR)
(74) Mandataire: Lasson, Cédric Y. M.
(86) Numéro de dépôt international: PCT/FR2008/000685
(87) Numéro de publication internationale: WO 2008/155485

(56) Documents cités:
- EP-A- 1 145 936
- GB-A- 2 373 228

## Description

L'invention concerne un procédé de réglage de la position angulaire de roulage du plan d'une roue de véhicule automobile, ainsi qu'un montage de roue d'un véhicule automobile dans lequel ledit procédé peut être mis en oeuvre.

L'invention s'applique notamment au réglage de la position angulaire de roulage du plan d'une roue non directrice, ainsi qu'un montage de roue arrière d'un véhicule automobile sur un essieu.

Pour améliorer le comportement dynamique d'un véhicule automobile, il est connu de régler statiquement la position angulaire de roulage du plan de roue, notamment en montant ladite roue de sorte qu'elle présente un angle de pince et éventuellement un angle de carrossage non nuls.

L'angle de pince est défini comme étant l'angle séparant, dans un plan horizontal parallèle au sol, le plan de la roue du plan médian du véhicule. Lorsque l'avant de la roue se déplace vers l'intérieur, respectivement vers l'extérieur, on parle alors de pince, respectivement d'ouverture. L'angle de carrossage est l'angle du plan de la roue avec l'axe vertical, le carrossage étant positif si la roue penche vers l'extérieur du véhicule.

Toutefois, lors du roulage, le décalage angulaire entre le plan de roue et le châssis du véhicule induit une sollicitation plus importante du pneumatique ainsi qu'une surconsommation de carburant due à la résistance au roulement qui en résulte.

On connaît par ailleurs des procédés de réglage dynamique de la position angulaire de roulage du plan de roue, dans lesquels ledit réglage est asservi à des conditions de roulage, notamment en vu de régler en continu ladite position angulaire en fonction de la situation dynamique de roulage.

Le document GB-2 373 228 décrit un essieu pour camion sur lequel l'angle de chasse peut être ajusté en fonction de la direction de déplacement dudit camion. L'essieu comprend un porte roue monté sur un support au moyen d'un premier pivot, le support étant monté sur l'arbre de l'essieu au moyen d'un second pivot. Le support comprend des ressorts à air comprimé destinés à faire pivoter ledit support entre deux directions opérationnelles. Un angle de chasse positif est obtenu lorsque le camion se déplace vers l'avant, un angle de chasse négatif étant obtenu lorsque ledit camion se déplace vers l'arrière.

Le document EP-1 145 936 décrit un dispositif d'ajustement de l'alignement des roues d'un véhicule automobile qui comprend au moins une paire d'éléments supports qui sont exactement ou à peu près adjacents et dont la position angulaire peut être activement ajustée durant le déplacement dudit véhicule, de sorte que le réglage angulaire est automatiquement ajusté au moyen de l'alignement des roues en cas de situation critique telle qu'un freinage et/ou un braquage avec une force latérale et/ou de rotation importante.

Toutefois, la mise en oeuvre de ces réalisations présente une complexité importante. En outre, s'agissant d'une fonction nécessaire au comportement dynamique du véhicule, notamment pour la prise de virage, les contraintes de sécurisation de son fonctionnement sont d'une rigueur importante.

L'invention vise à proposer un procédé de réglage de la position angulaire de roulage du plan d'une roue de véhicule automobile qui permet d'améliorer le rendement énergétique et la sécurité du comportement dynamique du véhicule, l'implémentation dudit procédé étant particulièrement simple tant mécaniquement que relativement aux procédures de validation spécifique aux fonctions intervenant sur le comportement dynamique dudit véhicule.

A cet effet, selon un premier aspect, l'invention propose un procédé de réglage de la position angulaire de roulage du plan d'une roue de véhicule automobile, dans lequel la roue est montée sur ledit véhicule de sorte que le plan de ladite roue puisse présenter une position angulaire statique et une position angulaire de sécurité, ledit procédé prévoyant de maintenir le plan de la roue en position angulaire statique lors du roulage de ladite roue et, en cas de détection d'au moins un paramètre de roulage critique, de déplacer le plan de roue dans une position angulaire de sécurité pendant un laps de temps prédéterminé avant le retour dudit plan de la roue en position angulaire statique.

Selon un deuxième aspect, l'invention propose un montage de roue d'un véhicule automobile par l'intermédiaire d'un porte roue, ledit porte roue étant associé audit véhicule par l'intermédiaire d'au moins un pivot de sorte que le plan de la roue puisse présenter un premier angle de pince sensiblement nul et un deuxième angle de pince non nul, ledit montage comprenant en outre un actionneur binaire pour le déplacement du porte roue dans chacun des angles de pince du plan de roue, ledit actionneur comprenant un dispositif de commande qui est connecté à un système de détermination d'au moins un paramètre de roulage, ledit dispositif de commande étant agencé pour régler l'angle de pince par mise en oeuvre d'un tel procédé.

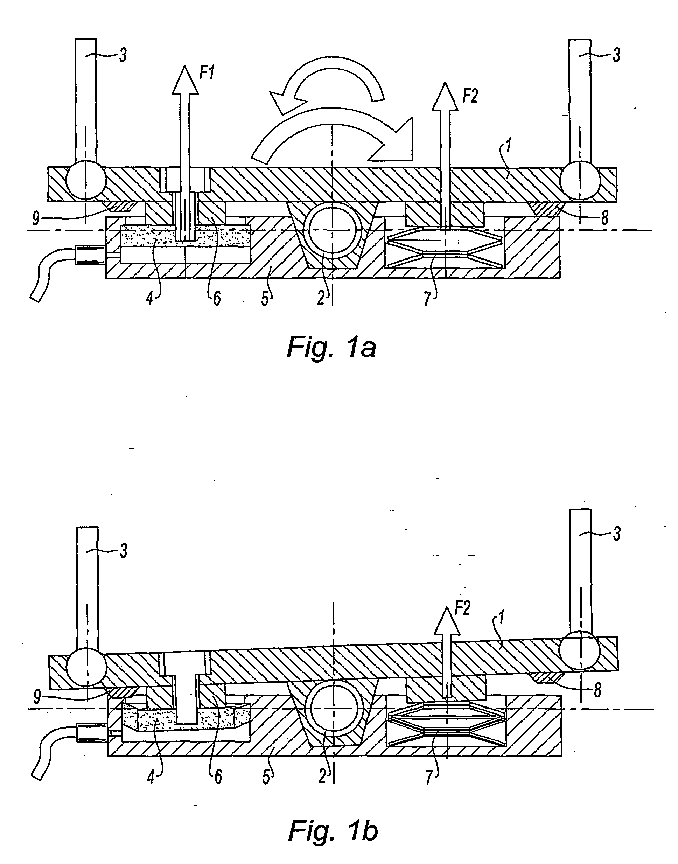

D'autres objets et avantages de l'invention apparaîtront dans la description qui suit, faite en référence à la figure annexée qui représente de façon schématique le montage d'un porte roue respectivement en position à angle de pince sensiblement nul (figure 1 a) et à angle de pince non nul (figure 1 b).

L'invention concerne un procédé de réglage de la position angulaire du plan d'une roue de véhicule automobile, notamment d'une roue arrière non directrice. En particulier, le procédé peut être mis en oeuvre sur chacune des roues d'un essieu.

Comme représenté sur les figures, la roue est montée de sorte que le plan de la roue puisse présenter deux positions angulaires, nommées respectivement position angulaire statique (figure 1a) et position angulaire de sécurité (figure 1b).

Dans un exemple de réalisation, la position angulaire de roulage est choisie parmi l'angle de pince, l'angle de carrossage ou une combinaison de ces deux angles. En particulier, la position angulaire statique peut correspondre à un angle de pince et/ou à un angle de carrossage sensiblement nul.

Dans des exemples de réalisation, la position angulaire statique correspond à des angles de pince et de carrossage de 0°, la position angulaire de sécurité correspondant à un angle de pince inférieur à 0,5°, notamment de 0,35°, et à un angle de carrossage nul. Dans cette réalisation, le déplacement angulaire du plan de roue étant inférieur à 0,5°, celui-ci n'est objectivement pas perceptible par le conducteur. En variante, l'angle de pince de la position angulaire de sécurité peut être de l'ordre de 1°, ou moins.

La roue est montée en rotation par l'intermédiaire d'un porte roue (non représenté). Dans le mode de réalisation représenté, le porte roue est associé au véhicule par l'intermédiaire d'une platine 1 portant un pivot central 2 permettant la disposition du plan de roue dans les deux positions angulaires par basculement de ladite platine relativement audit véhicule.

Dans le mode de réalisation représenté qui correspond à un montage de roue sur un essieu dit multi-bras, l'extrémité d'un bras de suspension 3 est montée pivotante sur chacune des extrémités de la platine 1, l'autre extrémité desdits bras étant solidarisée au porte roue pour transmettre le basculement de la platine 1 audit porte roue. Sur les figures, les bras 3 sont espacés longitudinalement de sorte à disposer le plan de roue suivant deux angles de pince différents, notamment un angle de pince sensiblement nul et un angle de pince non nul. Selon une autre réalisation, on pourrait prévoir un essieu comprenant une traverse sur chacune des extrémités de laquelle une roue est montée suivant l'invention.

En variante, on pourrait espacer les bras 3 verticalement pour disposer le plan de roue suivant deux angles de carrossage différents, ou suivant une combinaison de ces deux directions pour disposer le plan de roue suivant deux combinaisons d'angles de pince et de carrossage. En particulier, cette dernière réalisation peut permettre de contre carrosser le plan de roue lors de la prise de pince.

Le montage de roue comprend en outre un actionneur binaire pour le déplacement du porte roue dans chacun des angles de pince du plan de roue. L'actionnaire représenté comprend un vérin 4, par exemple hydroélastique, qui est prévu entre un support 5 solidaire du véhicule et la platine 1. Plus précisément, le vérin 4 comprend un organe 6 d'actionriement de la platine 1 en basculement autour du pivot 2, ledit organe étant associé au voisinage d'une première extrémité de la platine 1, notamment entre un bras 3 et le pivot 2. Le support peut être solidaire de la caisse du véhicule ou d'un sous-châssis pour faciliter l'assemblage du véhicule et mieux filtrer les vibrations.

L'actionneur comprend en outre, à l'opposé du vérin 4 par rapport au pivot 2, un ressort 7 qui est monté en charge entre le support 5 et la platine 1. Par ailleurs, pour définir la course de basculement de la platine 1 relativement au support 5, ladite platine comprend des butées 8, 9 de contact avec le support 5 dans respectivement une position de basculement.

Ainsi, lorsque le vérin est mis sous pression, il exerce une force F₁ qui est supérieure à la force F₂ exercée par le ressort 7, de sorte à faire basculer la platine 1 pour la disposer sensiblement longitudinalement (figure 1a) avec une butée 8 en appui sur le support 5. Dans le mode de réalisation représenté, cette disposition correspond à un angle de pince sensiblement nul. En outre, dans cette position, le ressort 7 est préchargé par rapprochement de la platine 1 vers le support 5.

En cas de désactivation du vérin 4, la force F₁ devient inférieure à la force F₂ de sorte à induire le basculement de la platine 1 dans la deuxième position avec l'autre butée 9 en appui sur le support 5 (figure 1b). Cette position correspond à un angle de pince non nul pour le plan de roue. Dans cette réalisation, en cas de dysfonctionnement du vérin 4, la platine 1 est positionnée dans la position de la figure 1b, qui correspond à un angle de pince non nul.

On décrit ci-dessous le procédé de réglage selon l'invention qui prévoit de maintenir le plan de roue en position angulaire statique lors du roulage de la roue et, en cas de détection d'au moins un paramètre de roulage critique, de déplacer le plan de roue dans une position angulaire de sécurité pendant un laps de temps prédéterminé avant le retour dudit plan de roue en position angulaire statique.

Dans le mode de réalisation décrit, le déplacement de la roue entre ses deux positions angulaires est réalisé par l'actionneur binaire 4, 7 qui présente un état de mise en position angulaire statique et un état de mise en position angulaire de sécurité. Pour ce faire, l'actionneur 4, 7 comprend un dispositif de commande du vérin 4 qui est connecté à un système de détermination d'au moins un paramètre de roulage, ledit dispositif de commande étant agencé pour régler l'angle de pince par mise en oeuvre du procédé. En particulier, le système de détermination peut utiliser les capteurs existants dans le véhicule.

Ainsi, il est possible de maintenir le roulage avec un angle de pince sensiblement nul, ce qui est bénéfique d'un point de vue de l'usure du pneumatique et de la consommation induite. Et, en cas de roulage dans une situation nécessitant un angle de pince, de fournir rapidement cet angle et ce pendant un laps de temps prédéterminé de sorte à améliorer ponctuellement le comportement dynamique du véhicule. En outre, l'angle de pince n'est pas piloté en fonction de conditions de roulage du véhicule, ce qui facilite son implémentation notamment relativement aux contraintes de validation des fonctions de sécurité du véhicule.

En outre, l'état stable de l'actionneur 4, 7 décrit correspond à la position angulaire de sécurité du plan de la roue, ce qui permet de sécuriser le comportement dynamique du véhicule en cas de défaillance dudit actionneur.

Par ailleurs, l'actionneur 4, 7 peut être agencé pour que le temps de mise en position angulaire de sécurité soit de l'ordre du dixième de seconde, ce qui permet une sécurisation rapide du comportement dynamique. Et, le temps de retour en position statique peut être supérieur au temps de mise en position angulaire de sécurité, par exemple de l'ordre de la seconde voire de quelconque dizaines de secondes. Il est donc possible de mettre en oeuvre le procédé de réglage avec des actionneurs simples et à faible consommation d'énergie.

Selon une réalisation, le laps de temps pendant lequel la position de sécurité est maintenue peut être inférieur à 10 secondes, notamment de l'ordre de 5 secondes. En effet, cette durée s'avère dans la majorité des cas suffisante pour stabiliser le comportement dynamique du véhicule.

Dans des exemples de réalisation, le paramètre de roulage critique peut correspondre au dépassement d'une valeur seuil pour un paramètre de roulage du véhicule, ledit paramètre pouvant être choisi parmi l'accélération latérale, la pression de freinage, la vitesse de rotation du volant.

Dans des exemples de réalisation, la valeur seuil d'accélération latérale est de 0,7 g, la valeur seuil de pression de freinage est de 38 bar et la valeur seuil de vitesse de rotation du volant est de 500°/sec. En outre, le paramètre de roulage critique peut être déterminé en fonction de la vitesse d'avancement du véhicule et/ou de l'intervention d'un système de sécurisation du comportement dynamique du véhicule, tel que l'ABS ou l'ESP.

## Revendications

1. Procédé de réglage de la position angulaire de roulage du plan d'une roue de véhicule automobile, dans lequel la roue est montée sur ledit véhicule de sorte que le plan de ladite roue puisse présenter une position angulaire statique et une position angulaire de sécurité, ledit procédé prévoyant de maintenir le plan de la roue en position angulaire statique lors du roulage de ladite roue et, en cas de détection d'au moins un paramètre de roulage critique, de déplacer le plan de roue dans une position angulaire de sécurité pendant un laps de temps prédéterminé avant le retour dudit plan de la roue en position angulaire statique.

2. Procédé de réglage selon la revendication 1, **caractérisé en ce que** la position angulaire de roulage est choisie parmi l'angle de pince, l'angle de carrossage ou une combinaison de ces deux angles.

3. Procédé de réglage selon la revendication 2, **caractérisé en ce que** la position angulaire statique correspond à un angle de pince et/ou à un angle de carrossage sensiblement nul.

4. Procédé de réglage selon l'une quelconque des revendications 1 à 3, **caractérisé en ce que** le laps de temps est inférieur à 10 secondes, notamment de l'ordre de 5 secondes.

5. Procédé de réglage selon l'une quelconque des revendications 1 à 4, **caractérisé en ce que** le paramètre de roulage critique correspond au dépassement d'une valeur seuil pour un paramètre de roulage du véhicule, ledit paramètre étant choisi parmi l'accélération latérale, la pression de freinage, la vitesse de rotation du volant.

6. Procédé de réglage selon l'une quelconque des revendications 1 à 5, **caractérisé en ce que** le déplacement de la roue entre ses deux positions angulaires est réalisé par un actionneur binaire (4, 7) présentant un état de mise en position angulaire statique et un état de mise en position angulaire de sécurité.

7. Procédé de réglage selon la revendication 6, **caractérisé en ce que** l'état stable de l'actionneur (4, 7) correspond à la position angulaire de sécurité du plan de la roue.

8. Procédé de réglage selon la revendication 6 ou 7, **caractérisé en ce que** le temps de mise en position angulaire de sécurité est de l'ordre du dixième de seconde.

9. Procédé de réglage selon l'une quelconque des revendications 1 à 8, **caractérisé en ce que** le temps de retour du plan de roue en position statique est supérieur au temps de mise en position angulaire de sécurité.

10. Montage de roue- d'un véhicule automobile par l'intermédiaire d'un porte roue, ledit porte roue étant associé audit véhicule par l'intermédiaire d'au moins un pivot (2) de sorte que le plan de la roue puisse présenter un premier angle de pince sensiblement nul et un deuxième angle de pince non nul, ledit montage comprenant en outre un actionneur binaire (4, 7) pour le déplacement du porte roue dans chacun des angles de pince du plan de roue, ledit actionneur comprenant un dispositif de commande qui est connecté à un système de détermination d'au moins un paramètre de roulage, ledit dispositif de commande étant agencé pour régler l'angle de pince par mise en oeuvre du procédé selon l'une quelconque des revendications précédentes.

11. Montage de roue selon la revendication 10, **caractérisé en ce que** le porte roue est associé au véhicule par l'intermédiaire d'une platine (1) portant un pivot central (2).

12. Montage de roue selon la revendication 11, **caractérisé en ce que** l'actionneur binaire comprend :
- un vérin (4) qui est prévu entre un support (5) et la platine (1), ledit vérin comprenant un organe (6) d'actionnement de la platine (1) en basculement autour du pivot (2) ; et
- à l'opposé du vérin (4) par rapport au pivot (2), un ressort (7) qui est monté en charge entre le support (5) et la platine (1).

13. Montage de roue selon la revendication 12, **caractérisé en ce que** la platine (1) comprend deux butées (8, 9) de contact avec le support (5) dans respectivement une position de basculement.

14. Montage de roue selon la revendication 12 ou 13, **caractérisé en ce que** la position angulaire statique est obtenue par activation du vérin, le ressort (7) étant préchargé dans cette position pour obtenir la position angulaire de sécurité en cas de désactivation du vérin (4).

## Claims

1. Method for adjusting the rolling angular position of the plane of a motor vehicle wheel, in which the wheel is mounted on said vehicle so that the plane of said wheel can present a static angular position and a safety angular position, said method providing for the plane of the wheel to be maintained in the static angular position when said wheel is rolling and, if at least one critical rolling parameter is detected, for the wheel plane to be shifted to a safety angular position for a predetermined time period before the return of said plane of the wheel to the static angular position.

2. Adjustment method according to Claim 1, **characterized in that** the rolling angular position is chosen from the pinch angle, the camber angle or a combination of these two angles.

3. Adjustment method according to Claim 2, **characterized in that** the static angular position corresponds to a substantially zero pinch angle and/or camber angle.

4. Adjustment method according to any one of Claims 1 to 3, **characterized in that** the time period is less than 10 seconds, notably of the order of 5 seconds.

5. Adjustment method according to any one of Claims 1 to 4, **characterized in that** the critical rolling parameter corresponds to the exceeding of a threshold value for a vehicle rolling parameter, said parameter being chosen from lateral acceleration, braking pressure and flywheel rotation speed.

6. Adjustment method according to any one of Claims 1 to 5, **characterized in that** the displacement of the wheel between its two angular positions is performed by a binary actuator (4, 7) that has a static angular position setting state and a safety angular position setting state.

7. Adjustment method according to Claim 6, **characterized in that** the stable state of the actuator (4, 7) corresponds to the safety angular position of the plane of the wheel.

8. Adjustment method according to Claim 6 or 7, **characterized in that** the safety angular position setting time is of the order of a tenth of a second.

9. Adjustment method according to any one of Claims 1 to 8, **characterized in that** the time for return of the wheel plane to the static position is greater than the safety angular position setting time.

10. Wheel mounting for a motor vehicle via a wheel carrier, said wheel carrier being associated with said vehicle via at least one pivot (2) such that the plane of the wheel can present a first substantially zero pinch angle and a second non-zero pinch angle, said mounting also comprising a binary actuator (4, 7) for the displacement of the wheel carrier in each of the pinch angles of the wheel plane, said actuator comprising a control device which is connected to a system for determining at least one rolling parameter, said control device being arranged to adjust the pinch angle by implementing the method according to any one of the preceding claims.

11. Wheel mounting according to Claim 10, **characterized in that** the wheel carrier is associated with the vehicle via a plate (1) bearing a central pivot (2).

12. Wheel mounting according to Claim 11, **characterized in that** the binary actuator comprises:
- a cylinder (4) which is provided between a support (5) and the plate (1), said cylinder comprising a member (6) for actuating the plate (1) by tilting about the pivot (2); and
- opposite the cylinder (4) in relation to the pivot (2), a spring (7) which is fitted under load between the support (5) and the plate (1).

13. Wheel mounting according to Claim 12, **characterized in that** the plate (1) comprises two abutments (8, 9) for contact with the support (5) in respectively one tilt position.

14. Wheel mounting according to Claim 12 or 13, **characterized in that** the static angular position is obtained by activation of the cylinder, the spring (7) being preloaded in this position to obtain the safety angular position in case of deactivation of the cylinder (4).

## Patentansprüche

1. Verfahren zur Einstellung der Rollwinkelposition der Ebene eines Kraftfahrzeugrads, wobei das Rad so an dem Fahrzeug angebracht ist, dass die Ebene des Rads eine statische Winkelposition und eine Sicherheitswinkelposition aufweisen kann, wobei das Verfahren vorsieht, die Ebene des Rads beim Rollen des Rads in der statischen Winkelposition zu halten und bei Erfassung mindestens eines kritischen Rollparameters die Radebene für eine vorbestimmte Zeitdauer in eine Sicherheitswinkelposition zu verschieben, bevor die Radebene wieder in die statische Winkelposition zurückgeführt wird.

2. Einstellverfahren nach Anspruch 1, **dadurch gekennzeichnet, dass** die Rollwinkelposition zwischen Radspurwinkel, Radsturzwinkel oder einer Kombination aus diesen beiden Winkeln ausgewählt wird.

3. Einstellverfahren nach Anspruch 2, **dadurch gekennzeichnet, dass** die statische Winkelposition einem Radspurwinkel und/oder einem Radsturzwinkel von im Wesentlichen null entspricht.

4. Einstellverfahren nach einem der Ansprüche 1 bis 3, **dadurch gekennzeichnet, dass** die Zeitdauern unter 10 Sekunden, insbesondere im Bereich von 5 Sekunden, liegen.

5. Einstellverfahren nach einem der Ansprüche 1 bis 4, **dadurch gekennzeichnet, dass** der kritische Rollparameter dem Überschreiten eines Schwellwerts für einen Rollparameter des Fahrzeugs entspricht, wobei der Parameter zwischen Querbeschleunigung, Bremsdruck und Drehgeschwindigkeit des Lenkrads ausgewählt wird.

6. Einstellverfahren nach einem der Ansprüche 1 bis 5, **dadurch gekennzeichnet, dass** die Verschiebung des Rads zwischen seinen beiden Winkelpositionen durch einen binären Aktuator (4, 7) durchgeführt wird, der einen Zustand zur Stellung in die statische Winkelposition und einen Zustand zur Stellung in die Sicherheitswinkelposition aufweist.

7. Einstellverfahren nach Anspruch 6, **dadurch gekennzeichnet, dass** der stabile Zustand des Aktuators (4, 7) der Sicherheitswinkelposition der Radebene entspricht.

8. Einstellverfahren nach Anspruch 6 oder 7, **dadurch gekennzeichnet, dass** die Zeit zur Stellung in die Sicherheitswinkelposition ca. eine Zehntelsekunde beträgt.

9. Einstellverfahren nach einem der Ansprüche 1 bis 8, **dadurch gekennzeichnet, dass** die Zeit zur Rückführung der Radebene in die statische Position länger ist als die Zeit zur Stellung in die Sicherheitswinkelposition.

10. Montage eines Kraftfahrzeugrads mittels eines Radhalters, wobei der Radhalter mittels mindestens eines Drehzapfens (2) so mit dem Fahrzeug verbunden ist, dass die Radebene einen ersten Radspurwinkel von im Wesentlichen null und einen zweiten Radspurwinkel von ungleich null aufweisen kann, wobei die Montage des Weiteren einen binären Aktuator (4, 7) zur Verschiebung des Halters in jeden der Spurwinkel der Radebene umfasst, wobei der Aktuator eine Steuervorrichtung umfasst, die mit einem System zur Bestimmung mindestens eines Rollparameters verbunden ist, wobei die Steuervorrichtung zur Einstellung des Spurwinkels durch Verwendung des Verfahrens nach einem der vorhergehenden Ansprüche angeordnet ist.

11. Radmontage nach Anspruch 10, **dadurch gekennzeichnet, dass** der Radhalter mittels einer Grundplatte (1), die einen mittleren Drehzapfen (2) trägt, mit dem Fahrzeug verbunden ist.

12. Radmontage nach Anspruch 11, **dadurch gekennzeichnet, dass** der binäre Aktuator Folgendes umfasst:
- einen Zylinder (4), der zwischen einer Stütze (5) und der Grundplatte (1) vorgesehen ist, wobei der Zylinder ein Glied (6) zur Betätigung der Grundplatte (1) zum Kippen um den Drehzapfen (2) enthält; und
- gegenüber dem Zylinder (4) bezüglich des Drehzapfens (2) eine Feder (7), die zwischen der Stütze (5) und der Grundplatte (1) gespannt angebracht ist.

13. Radmontage nach Anspruch 12, **dadurch gekennzeichnet, dass** die Grundplatte (1) zwei Anschläge (8, 9) zum Kontakt mit der Stütze (5) in jeweils einer Kippposition aufweist.

14. Radmontage nach Anspruch 12 oder 13, **dadurch gekennzeichnet, dass** die statische Winkelposition durch Aktivierung des Zylinders erhalten wird, wobei die Feder (7) in dieser Position vorbelastet ist, um die Sicherheitswinkelposition bei Deaktivierung des Zylinders (4) zu erhalten.
